# EUROPÄISCHE PATENTSCHRIFT

(11) **EP 1 114 309 B1**
(45) Veröffentlichungstag und Bekanntmachung des Hinweises auf die Patenterteilung: **01.04.2009**
(21) Anmeldenummer: 99944156.1
(22) Anmeldetag: 15.09.1999
(51) Int. Cl.: G01N 21/64, G01N 33/533

(54) **OPTO-CHEMISCHER SENSOR SOWIE VERFAHREN ZU SEINER HERSTELLUNG**
OPTO-CHEMICHAL SENSOR AND CORRESPONDING PRODUCTION METHOD
DETECTEUR OPTOCHIMIQUE ET SON PROCEDE DE PRODUCTION

(30) Priorität: 15.09.1998 AT 155098
(43) Veröffentlichungstag der Anmeldung: 11.07.2001
(73) Patentinhaber: Joanneum Research Forschungsgesellschaft mbH, 8010 Graz (AT)
(72) Erfinder: BIEBERNIK, Karin, Turramurra, NSW 2074 (AU); REININGER, Franz, A-8505 St. Nikolai i.S. (AT); TRETTNAK, Wolfgang, A-8562 Mooskirchen (AT)
(74) Vertreter: Cunow, Gerda
(86) Internationale Anmeldenummer: PCT/AT1999/000225
(87) Internationale Veröffentlichungsnummer: WO 2000/016074

(56) Entgegenhaltungen:
- EP-A- 0 550 424
- EP-A- 0 601 816
- EP-A- 0 824 212
- WO-A-95/26501
- WO-A-97/11067
- US-A- 5 028 395
- D.B. PAPKOVSKY ET AL.: "Biosensors on the basis of luminescent oxygen sensor: the use of microporous light-scattering support materials." SENSORS AND ACTUATORS B., Bd. 51, August 1998 (1998-08), Seiten 137-145, XP000415400 ELSEVIER SEQUOIA S.A., LAUSANNE., CH ISSN: 0925-4005

## Beschreibung

Die vorliegende Erfindung bezieht sich auf einen opto-chemischen Sensor, bestehend aus einer Polymermatrix und einem darin enthaltenen Lumineszenzfarbstoff, dessen Emissionsvermögen nach einer Anregung mit elektromagnetischer Strahlung, insbesondere Licht, durch nachzuweisende Substanzen, wie gasförmiges oder gelöstes O₂, SO₂, H₂O₂ Cl₂, Stickoxide, halogenierte Kohlenwasserstoffe, veränderbar ist, wobei die Polymermatrix aus wenigstens einem Polymer ohne Zusatz von Weichmachern gebildet ist, welches Polymer in der Hauptkette Phenylgruppen enthält, sowie auf ein Verfahren zur Herstellung eines opto-chemischen Sensors, dessen Emissionsvermögen nach einer Anregung mit elektromagnetischer Strahlung, insbesondere Licht, durch nachzuweisende Substanzen, wie gasförmiges oder gelöstes O₂, SO₂, H₂O₂, veränderbar ist, wobei eine wenigstens 1 bis 25 Gew.%-ige Lösung eines Polymers, welches in der Hauptkette Phenylgruppen enthält, in einem organischen Lösungsmittel hergestellt wird und die Mischung zu einer homogenen Membran verfestigt wird.

Sensoren zum Messen der Konzentration von bestimmten Substanzen bzw. Gasen in Lösungen bzw. Feststoffen, beispielsweise in biologischem Material, arbeiten üblicherweise elektrochemisch und weisen den Nachteil auf, daß sie für einen quantitativen Nachweis des zu bestimmenden Gases einen Teil der zu bestimmenden Substanz verbrauchen, wodurch das Meßergebnis verfälscht wird. Um die Veränderung der Konzentration der zu messenden Substanz im Zuge der Messung hintanzuhalten, wurden in letzter Zeit opto-chemische Sensoren entwickelt, welche sich dadurch auszeichnen, daß sie die Zusammensetzung des Analyten nicht verändern, sondern den quantitativen Nachweis der Konzentration der zu bestimmenden Substanz lediglich durch eine Lumineszenzlöschung der in dem Sensor enthaltenen, lumineszierenden Substanz anzeigen, wobei hiefür charakteristische Parameter, wie beispielsweise die Lumineszenzintensität, die Phasenverschiebung des Lumineszenzsignals oder die Abklingzeit der Lumineszenz überprüft werden. Durch Vergleich des Lumineszenzsignals mit einer Kalibrierfunktion, beispielsweise mittels einer elektronischen Recheneinheit, ist auf diese Weise ein quantitativer Nachweis der zu messenden Substanzen möglich.

Ein Sensor sowie ein Verfahren zur Herstellung desselben der eingangs genannten Art ist beispielsweise der EP-A 0 550 424 zu entnehmen, wobei spezielle Polymere genannt sind, in denen Gase, wie beispielsweise Sauerstoff und CO₂ gut lösbar sein sollen. Weitere opto-chemische Sensoren ähnlicher Art sind beispielsweise der WO 97/11067 und der EP-A 0 601 816 zu entnehmen, wobei keiner dieser Sensoren aufgrund der verwendeten Polymere eine Sterilisierbarkeit, insbesondere unter Anwendung einer erhöhten Temperatur, und somit eine nachfolgende Verwendbarkeit in biologischem Material ermöglicht.

Aus der DE-A 33 46 810 sind ein Verfahren und eine Vorrichtung zur Bestimmung der Konzentration von Sauerstoff in einer gasförmigen oder flüssigen Umgebung bekannt geworden, welche auf der Löschung (Quenchung) von Lumineszenz beruhen, wobei eine Verkürzung der Lebensdauer oder Verminderung der Emissionsintensität von bestimmten Metallkomplexen in Gegenwart von Sauerstoff für eine Bestimmung des Sauerstoffgehalts herangezogen wird.

Weiters ist beispielsweise aus der DE-A 31 48 830 eine Vorrichtung zur Bestimmung der Sauerstoffkonzentration in Gasen, Flüssigkeiten und Geweben bekannt geworden, bei welcher durch Bestrahlung einer von einer "einkörnigen" Schicht auf einem durchsichtigen Träger mittels einer Haft- oder Kleberschicht gebildeten, lumineszierenden Oberfläche mit einem Licht bestimmter Wellenlänge, Einwirken des Meßgutes auf diese Oberfläche und Messung der Verringerung der Lichtemission dieser Oberfläche die Gaskonzentration des Meßgutes bestimmt wird. Diese bekannte Vorrichtung, welche für bestimmte Meßbereiche des Sauerstoffgehalts in dem Meßgut verwendbar ist, weist jedoch den Nachteil auf, daß der zur Verwendung gelangende opto-chemische Sensor weder vor noch nach einer durchgeführten Messung mit chemischen Methoden reinig- bzw. sterilisierbar ist und somit prinzipiell in biologischem Material kaum bzw. äußerst begrenzt einsetzbar ist.

Auch aus der EP-A 0 190 829 ist ein optischer Sensor für die Überwachung des Partialdruckes von Sauerstoff bekannt geworden, welcher im wesentlichen analog zu jenem der DE-A 31 48 830 arbeitet, wobei jedoch der in dieser Vorrichtung zum Einsatz gelangende opto-chemische Sensor in einer Polymermatrix, welche einen Weichmacher enthält, eingebettet ist, sodaß der Sensor nur im Zusammenhang mit Substanzen, Lösungen oder Materialien einsetzbar ist, welche den in der Matrix enthaltenen Weichmacher nicht aus dem Sensor herauslösen.

Aus der WO 87/00023 sind Verfahren zum Messen der Sauerstoffkonzentration mit Hilfe von opto-chemischen Sensoren bekannt geworden, wobei auch die für diese Verfahren verwendeten Sensoren den Nachteil aufweisen, daß sie häufig Weichmacher enthalten bzw. aus Materialien bestehen, die keiner Wärmebehandlung und/oder chemischen Behandlung standhalten, sodaß der Sensor weder vor noch nach seiner Verwendung einer Reinigung bzw. Sterilisation unterworfen werden kann.

Die vorliegende Erfindung zielt somit darauf ab, einen opto-chemischen Sensor zur Verfügung zu stellen, welcher wiederholt reinig- bzw. sterilisierbar und somit erhöhten Temperaturen aussetzbar ist, sodaß er zur Messung von nachzuweisenden Substanzen, insbesondere in gasförmigem Zustand oder gelöst vorliegenden Gasen, in biologischem Material, insbesondere in Fermenterlösungen, einsetzbar ist.

Zur Lösung dieser Aufgaben ist der erfindungsgemäße opto-chemische Sensor ausgehend von einem Sensor der eingangs genannten Art im wesentlichen dadurch gekennzeichnet, daß das Polymer aus Polysulfonen, Polyethersulfonen, Polyetherimiden und/oder Polyoxyphenylenen gewählt ist, daß das Polymer eine Glasübergangstemperatur über 140°C aufweist und daß der Lumineszenzfarbstoff während der Sterilisation gleichmäßig verteilt ist. Da die Polymer- bzw. Trägermatrix aus wenigstens einem reinen Polymer gebildet ist, welches in der Hauptkette Phenylgruppen enthält, wobei erfindungsgemäß vorgesehen ist, daß das Polymer aus Polysulfonen, Polyethersulfonen, Polyetherimiden und/oder Polyoxyphenylenen gewählt ist, wird eine Matrix für den opto-chemischen Sensor ausgebildet, welche ausreichend stabil ist, um sie einer Sterilisationsbehandlung und/oder einer chemischen Reinigungsbehandlung zu unterwerfen, ohne daß die Polymermatrix sich in ihrer Zusammensetzung, mechanischen, thermischen und optischen Stabilität oder anderen physikalisch-chemischen Eigenschaften verändert. Diese Stabilität gegenüber sowohl physikalisch-chemischen Reinigungsverfahren als auch gegenüber einer Sterilisierung, z. B. mittels erhöhter Temperatur und Druck ist insbesondere für den Einsatz des erfindungsgemäßen opto-chemischen Sensors zur Messung von Sauerstoff in biologischem Material von Bedeutung und ermöglicht es, daß beispielsweise der Sensor direkt in einem Fermenter während des Fermentationsverfahrens angeordnet wird und über die Zeitdauer des Fermentationsverfahrens kontinuierlich reproduzierbare Werte liefert, ohne daß die Gefahr besteht, daß aus dem Sensormaterial Substanzen herausgelöst werden bzw. in die Fermentationsbrühe wandern, die eine Verunreinigung des Fermenterinhalts mit sich bringen und in der Folge aus dem Fermenterinhalt nicht mehr oder nur mehr äußerst schwer entfernt werden können und somit beispielsweise in Nahrungs- und Genußmitteln eine dauerhafte, möglicherweise gesundheitsgefährdende Verunreinigung darstellen würden.

Die erfindungsgemäß vorgeschlagenen Matrices aus Polysulfonen, Polyethersulfonen, Polyetherimiden und Polyoxyphenylen sind nach ihrer Herstellung und Aushärtung ausreichend flexibel, um Sensorfolien auszubilden, in welchen Lumineszenzfarbstoffe gelöst bzw. homogen verteilt vorliegen können, und gleichzeitig ausreichend stabil, um gegenüber Chemikalien, wie jenen, die in Lösungen von biologischem Material oder im biologischen Material direkt enthalten sind, und auch solchen, welche für die Reinigung und Wiederaufbereitung des Sensors verwendet werden, resistent zu sein. Die Polymere können darüber hinaus in speziellen organischen Lösungsmitteln gezielt gelöst werden, um beispielsweise eine gleichmäßige Verteilung des Lumineszenzfarbstoffes in der Trägermatrix des Sensors zu erreichen. Darüber hinaus ist eine aus einem derartigen Polymer gebildete Matrix sehr gut lichtdurchlässig, zeigt so gut wie keine Eigenlumineszenz und ist darüber hinaus ausreichend photostabil. Darüber hinaus haben Biokompatibilitätstests mit erfindungsgemäßen Sensoren, insbesondere enthaltend Polysulfon-Sensormembranen, ergeben, daß kein toxischer Einfluß auf mit den Membranen in Kontakt gelangenden Materialien feststellbar war.

Um eine wiederholte Sterilisierung und Reinigung des opto-chemischen Sensors sicherzustellen, ist erfindungsgemäß weiters vorgesehen, daß das Polymer eine Glasübergangstemperatur über 140 °C aufweist. Dadurch, daß das als Matrix eingesetzte Polymer eine Glasübergangstemperatur von über 140 °C aufweist, wird sichergestellt, daß auch bei Anwenden von erhöhten Temperaturen auf den Sensor ein Erweichen der Matrix und somit möglicherweise eine ungleichmäßige Verteilung des Lumineszenzfarbstoffes, insbesondere durch Wanderung bzw. Aggregation der Farbstoffmoleküle, während der Sterilisation nicht eintritt.

Um reproduzierbare Werte für die nachzuweisende(n) Substanz(en), insbesondere der Stoffe O₂, SO₂, H₂O₂, Cl₂ Stickoxide, halogenierte Kohlenwasserstoffe, über weitestgehend beliebige Konzentrationsbereiche derselben zu erreichen, ist der erfindungsgemäße opto-chemische Sensor bevorzugt so weitergebildet, daß die Menge an Lumineszenzfarbstoff in dem Polymer 0,01 bis 100 mMol Farbstoff pro kg Polymer, insbesondere 0,1 bis 20 mMol Farbstoff pro kg Polymer, beträgt. Selbst durch Einsatz von geringen Mengen an Farbstoff gelingt es somit, einen Sensor zur Verfügung zu stellen, welcher für reproduzierbare Messungen an nachzuweisenden Substanzen, insbesondere gasförmigen oder gelösten Sauerstoff, einsetzbar ist. Darüber hinaus zeichnet sich der erfindungsgemäße opto-chemische Sensor durch geringe Herstellungskosten aus, da nur geringe Mengen des teuren Lumineszenzfarbstoffes darin enthalten sind.

Besonders bevorzugt und insbesondere, um einen sterilisierbaren Sensor, in welchem der Farbstoff gleichmäßig verteilt bleibt, zu erhalten, wird der in der Trägermatrix enthaltene Lumineszenzfarbstoff so ausgewählt, daß der in der Polymermatrix enthaltene Lumineszenzfarbstoff ein bis mindestens 150 °C stabiler Farbstoff, gewählt aus der Gruppe der anorganischen Salze von Übergangsmetallkomplexen mit α-Diiminliganden, wie beispielsweise Tris(4,7-diphenyl-1,10-phenanthrolin)-Ruthenium(II)-Salze, Tris(1,10-phenanthrolin)-Ruthenium (II)-Salze und Tris-2,2'-bipyridyl-Ruthenium(II)-Salze, oder des Terpyridins, z.B. Osmiumterpyridin; der Übergangsmetallkomplexe von Porphyrinen oder Porphyrinderivaten, wie beispielsweise Komplexe des Tetraphenylporphyrins von Pt oder Pd, des Octaethylporphyrinketons von Pt oder Pd, des Tetrapentafluorophenylporphyrins von Pt oder Pd oder des Octaethylporphyrins von Pt oder Pd; der polycyclischen, aromatischen Kohlenwasserstoffe, wie beispielsweise Decacyclen, Pyren oder dessen Derivate, oder Campherchinon, ist. Die in dem erfindungsgemäßen opto-chemischen Sensor enthaltenen Farbstoffe sind, gelöst in den obengenannten Polymeren, hiebei sowohl sterilisierbar, d.h. durch Wärme, Druck, und auch chemische Substanzen, wie verdünnte Säuren und Basen, die für eine chemische Reinigung eingesetzt werden, nicht veränderbar bzw. zersetzbar und zeichnen sich darüber hinaus dadurch aus, daß sie reproduzierbare Meßergebnisse bei den unterschiedlichsten Konzentrationen der zu messenden bzw. zu bestimmenden Substanz zu liefern im Stande sind. Darüber hinaus ist ein derartiger Sensor aufgrund seiner vielseitigen Einsetzbarkeit, beispielsweise aufgrund seiner Kompatibilität mit Faseroptik, auch für Messungen an unzugänglichen Stellen, wie Bohrlöchern, verwendbar.

Um insbesondere einen Sensor zur Verfügung stellen zu können, welcher gegenüber mechanischer Verformung stabil ist, ist der erfindungsgemäße Sensor bevorzugt so weitergebildet, daß der opto-chemische Sensor auf einen Träger aufgebracht ist. Um durch das Trägermaterial keine Verfälschung der Meßergebnisse zu bewirken, ist der für den opto-chemischen Sensor gemäß der Erfindung eingesetzte Träger bevorzugt so weitergebildet, daß als Träger optisch inaktive, lichtdurchlässige, in organischen Lösungsmitteln, Säuren, Basen und Wasser unlösliche bzw. resistente Polymere, wie beispielsweise Polyester, wie PET, Polymethylmethacrylate oder Glas, verwendet werden. Derartige als Träger einsetzbare Materialien zeichnen sich dadurch aus, daß sie eine vernachlässigbare Eigenlumineszenz aufweisen, weder in dem Bereich, in welchem der Lumineszenzfarbstoff emittiert bzw. absorbiert, emittieren oder absorbieren noch in Lösungsmitteln, in welchen beispielsweise die Trägermatrix löslich ist, löslich bzw. angreifbar sind. Auf diese Weise kann ein stabiler Träger zur Verfügung gestellt werden, auf welchem die chemisch-sensitive Schicht festgelegt bzw. aufgebracht werden kann, um eine erhöhte mechanische Stabilität des Gesamtsystems zu erreichen. Ein aus derartigen Materialien hergestellter Sensor ist auch gegen erhöhte Drücke stabil und kann beispielsweise auch für Anwendungen in der Tiefsee eingesetzt werden.

Schließlich kann, wie dies einer bevorzugten Weiterbildung der vorliegenden Erfindung entspricht, der opto-chemische Sensor mit einer für die zu analysierende Substanz durchlässigen, optischen Isolierschicht abgedeckt sein. Eine derartige Isolierschicht ist insbesondere immer dann von Vorteil, wenn beispielsweise in dem zu analysierenden Medium lumineszierende Substanzen enthalten sind bzw. darin vermutet werden, um so eine optische Abschirmung, eine Abschirmung gegenüber dem Umgebungslicht oder eine Abschirmung gegenüber Umwelteinflüssen des Sensors zu erzielen. Darüber hinaus kann die optische Isolierschicht, wie dies einer bevorzugten Weiterbildung der vorliegenden Erfindung entspricht, aus grobporigem Polytetrafluorethylen, Copolymeren, bestehend aus 2,2-Bistrifluormethyl-4,5-difluoro-1,3-dioxolen und Tetrafluorethylen, oder Silikon bestehen, wodurch eine derartige optische Isolierschicht nicht nur die oben angeführten Vorteile einer Abschirmung ermöglicht, sondern auch einen mechanischen und zusätzlichen chemischen Schutz der Sensoroberfläche gewährleistet und gleichzeitig den Durchtritt der zu analysierenden Substanz zur Sensoroberfläche sicherstellt. Unter den Copolymeren, bestehend aus 2,2-Bistrifluormethyl-4,5-difluoro-1,3-dioxolen und Tetrafluorethylen, hat sich insbesondere das unter der Bezeichnung Teflon AF (Teflon AF ist eine Marke der Firma E.I. Du Pont de Nemours and Company) auf den Markt gebrachte als geeignet erwiesen.

Die vorliegende Erfindung zielt weiters auf ein Verfahren zur Herstellung eines sterilisierbaren, insbesondere wiederholt sterilisierbaren und somit erhöhten Temperaturen aussetzbaren, opto-chemischen Sensors ab, welcher zum Nachweis von Substanzen, wie O₂, SO₂ H₂O₂ Cl₂, Stickoxide, halogenierte Kohlenwasserstoffe, und insbesondere in biologischem Material vorhandenen Gasen, wie O₂, einsetzbar ist. Das erfindungsgemäße Verfahren ist hiebei ausgehend von dem Verfahren der eingangs genannten Art im wesentlichen dadurch gekennzeichnet, daß in der Lösung 0,01 bis 100 mMol Lumineszenzfarbstoff pro kg Polymer ausgewählt aus Polysulfonen, Polyethersulfonen, Polyetherimiden und/oder Polyoxyphenylenen, mit einer Glasübergangstemperatur über 140°c zugesetzt werden, daß als Lumineszenzfarbstoff ein bis mindestens 150 °C stabiler Farbstoff, gewählt aus der Gruppe der anorganischen Salze von Übergangsmetallkomplexen mit α-Diiminliganden, wie beispielsweise Tris(4,7-diphenyl-1,10-phenanthrolin)-Ruthenium(II)-Salze, Tris(1,10-phenanthrolin)-Ruthenium (II)-Salze und Tris-2,2'-bipyridyl-Ruthenium(II)-Salze, oder des Terpyridins, z.B. Osmiumterpyridin; der Übergangsmetallkomplexe von Porphyrinen oder Porphyrinderivaten, wie beispielsweise Komplexe des Tetraphenylporphyrins von Pt oder Pd, des Octaethylporphyrinketons von Pt oder Pd, des Tetrapentafluorophenylporphyrins von Pt oder Pd oder des Octaethylporphyrins von Pt oder Pd; der polycyclischen, aromatischen Kohlenwasserstoffe, wie beispielsweise Decacyclen, Pyren oder dessen Derivate, oder Campherchinon verwendet wird und daß der opto-chemische Sensor zur Fertigstellung in einem Ofen bei 100 bis 150 °C für 30 min bis 24 Std. nachgetrocknet wird. Dadurch, daß erfindungsgemäß eine Lösung aus einem Polymer, einem Lumineszenzfarbstoff und einem abzudampfenden Lösungsmittel hergestellt wird, gelingt es, einen opto-chemischen Sensor herzustellen, in welchem die geringen, darin enthaltenen Mengen an Lumineszenzfarbstoff gleichmäßig über das gesamte Volumen des Sensors verteilt sind, wodurch reproduzierbare Meßwerte an jedem Punkt des Sensors mit dem Sensor erzielbar werden, wobei die gleichmäßige Verteilung der Lumineszenzfarbstoffpartikel auch bei wiederholter Sterilisation nicht verändert bzw. beeinträchtigt wird. Die Wahl der Molmasse des eingesetzten Polymers ist hiebei nicht kritisch. Die untere Grenze wird durch jene Molmasse bestimmt, bei der das Polymer in der Lage ist, eine feste Schicht auszubilden, und nicht mehr als viskose Flüssigkeit zu betrachten ist. Die obere Grenze wird durch das Löslichkeitsverhalten des Polymers bestimmt. Um eine vollständige Entfernung der für die Herstellung des Sensors verwendeten, organischen Lösungsmittel zu gewährleisten, wird der Sensor für seine Fertigstellung darüber hinaus erfindungsgemäß in einem Ofen bei 100 °C bis 150 °C für 30 min bis 24 Std. nachgetrocknet, sodaß eine Entfernung sämtlicher Spuren der für die Herstellung der Lösung aus Polymermatrix und Lumineszenzfarbstoff verwendeten Lösungsmittel mit Sicherheit gewährleistet wird.

Um in dem erfindungsgemäßen Verfahren des Sensors das Matrixpolymer gezielt in Lösung zu bringen, ist das erfindungsgemäße Verfahren bevorzugt so weitergebildet, daß organische Lösungsmittel, wie Toluol, Chloroform und/oder Methylenchlorid oder eine Mischung daraus, verwendet werden. Die erfindungsgemäß eingesetzten Lösungsmittel sind insbesondere so gewählt, daß sie bei einem sich an das Herstellungsverfahren gegebenenfalls anschließenden Trocknungsverfahren quantitativ aus der Sensormembran entfernen lassen, sodaß bei Einsatz des Sensors in biologischem Material, wie beispielsweise in Fermenterlösungen, nicht die Gefahr besteht, daß die zu analysierenden bzw. zu untersuchenden Substanzen durch in das Material diffundierende Lösungsmittel verunreinigt werden.

Zur Herstellung eines Sensors kann beispielsweise gemäß verschiedener bekannter Verfahren vorgegangen werden, wie Spin-Coating; Aufbringen der Sensorschicht und/oder der optischen Isolierschicht mittels Rakel auf einen Träger; Drucken der Sensorschicht auf einen Träger oder, falls die optische Isolierschicht aufgedruckt werden soll, auf die Sensormembran; ein Beispiel hiefür ist das Tampondrucken. Auch die optische Isolierung kann als Träger dienen, sofern das Aufbringen der sensitiven Schicht auf eine Analytdurchlässige Schicht, die zugleich als optische Isolierung dient, erfolgt.

Um den erfindungsgemäßen opto-chemischen Sensor insbesondere zur Untersuchung von biologischem Material einsetzbar zu machen bzw. ihn beispielsweise direkt in Fermenterlösungen eintauchen zu können, ohne die zu fermentierenden Substanzen zu verunreinigen, ist das erfindungsgemäße Verfahren zur Herstellung des Sensors so weitergebildet, daß der Sensor bei einer Temperatur zwischen 100 °C und 150 °C und einem Druck zwischen 1,2 bar und 4 bar für 20 bis 90 min sterilisiert wird. Durch gezielte Auswahl der für die Herstellung des Sensors verwendeten Polymere und der entsprechenden Lumineszenzfarbstoffe wird es möglich, daß der Sensor bei erhöhten Temperaturen und Drücken für längere Zeiten sterilisiert werden kann, wobei dieses Sterilisierverfahren mehrmals wiederholt werden kann, ohne daß der Sensor in seinen Eigenschaften bzw. Meßgenauigkeit beeinträchtigt wird. Die Möglichkeit zur Sterilisierung und auch Trocknung des Sensors in einem Ofen ermöglicht es, den Sensor in sämtlichen Einsatzbereichen zu verwenden, in welchen es essentiell ist, daß die zu untersuchenden Substanzen nicht durch aus dem Sensor herausgelöste bzw. diffundierende Moleküle verunreinigt werden und welche auch hohe Meßgenauigkeiten bei höheren Temperaturen der Sensoren erfordern.

Die Sterilisierung des Sensors wird erfindungsgemäß unter Verwendung von Heißdampf, H₂O₂, Ethanol oder β- oder γ-Strahlen durchgeführt, wobei insbesondere die Sterilisierung mit Heißdampf bei erhöhten Drücken bevorzugt ist und erfindungsgemäß beispielsweise dadurch möglich ist, daß das für die Herstellung des Sensors zum Einsatz gelangende Polymermaterial eine erhöhte Glasübergangstemperatur aufweist, wodurch im Zuge des Sterilisierverfahrens eine Veränderung des Sensormaterials, insbesondere ein Fließen des Sensormaterials und somit eine ungleiche Verteilung des Lumineszenzfarbstoffes, beispielsweise durch Kristallisation des Farbstoffes, in demselben mit Sicherheit vermieden wird.

Um den erfindungsgemäßen Sensor wiederholt in verschiedensten Einsatzgebieten verwenden zu können, ist das erfindungsgemäße Verfahren so weitergebildet, daß der Sensor durch Tauchen in etwa 1 N Säure oder Lauge, insbesondere Phosphorsäure, NaOH, KOH, für 10 bis 40 min bei Temperaturen zwischen 20 und 90 °C gereinigt wird. Ein derartiges Reinigungsverfahren des erfindungsgemäßen, opto-chemischen Sensors kann hiebei vor oder nach einem Sterilisieren durchgeführt werden, um auch an der Oberfläche des Sensors abgeschiedene Verunreinigungen mit Sicherheit zu entfernen.

Die Erfindung wird nachfolgend anhand von Ausführungsbeispielen, welche die Herstellung von Sensoren mit Membranen aus verschiedenen organischen Polymeren, welche eine Phenylgruppe enthalten, sowie den beigeschlossenen Zeichnungen näher erläutert.

### Beispiel 1

### Herstellung, Kalibrierung und Sterilisierung eines opto-chemischen Sensors

Es werden 0,31 g Polysulfon der Firma Aldrich mit 2,81 g Chloroform versetzt und das Polymer durch Rühren bei Raumtemperatur im Lösungsmittel gelöst. 1,25 g der Polymerlösung werden entnommen und mit 0,0017 g Tris(4,7-diphenyl-1,10-phenanthrolin-Ruthenium(II)-perchlorat bei Raumtemperatur gerührt. Die Lösung wird durch Rakeln als dünne Schicht mit 50 µm Stärke auf 175 µm dicke Trägerschichten, insbesondere einer Polyesterfolie, aufgezogen. Nach einer Trockenperiode von maximal einer Stunde bei Raumtemperatur werden die derart hergestellten Folien bei etwa 138 °C im Trockenschrank für etwa 16 Stunden belassen.

Zu Kalibrierzwecken wurde die Phasenverschiebung der lumineszierenden Membran in Abhängigkeit vom Sauerstoffpartialdruck gemessen. Dann wurde die Membran bei etwa 134 °C 60 min lang in einem Autoklaven bei etwa 2 bar behandelt, etwa 15 Std. lang bei Raumtemperatur im Dunklen trocknen gelassen und erneut die Phasenverschiebung bestimmt. Der Vorgang des Behandelns im Autoklaven, Trocknens und Messens wurde viermal durchgeführt.

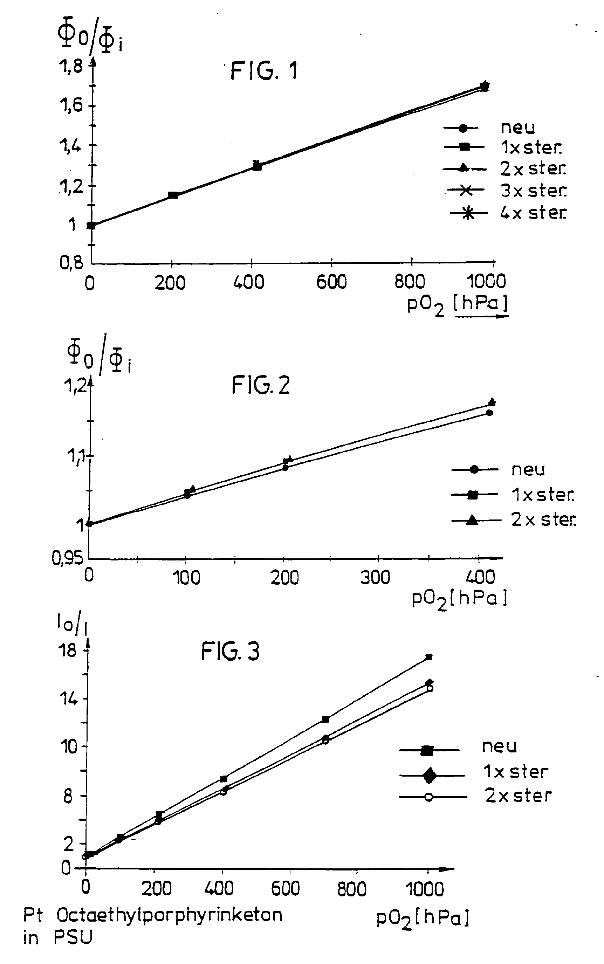

Fig. 1 zeigt die Kalibrierfunktion mit sauerstoffhaltigen Kalibriergasen einer neuen und einer ein-, zwei-, drei- und viermal im Autoklaven behandelten Membran, wobei auf der Abszisse der Partialdruck von Sauerstoff und auf der Ordinate die normierte Phasenverschiebung der lumineszierenden Membran gezeigt ist. Aus dieser Darstellung ist die Konstanz der Steigung Kₛᵥ der Stern Volmer Plots der Indikatormembranen zu erkennen.

Wird die Polysulfonmembran bei etwa 135 °C getrocknet und anschließend bei etwa 134 °C im Autoklaven behandelt, so beträgt die Abweichung der viermal im Autoklaven behandelten Membran von der Kalibrierfunktion derselben Membran nach der ersten Sterilisation die in der nachfolgenden Tabelle angeführten Werte. Die erste Sterilisation muß in diesem Zusammenhang als Vorbehandlung des Sensors angesehen werden.

| | |
|---|---|
| Vol.-% O₂-Gehalt im Kalibrierqas | (Trocknen bei ca. 135°C); Vergleich 4x zu 1x sterilisierter Membran |
| 0 | 0,11 |
| 5,1 | -0,03 |
| 10,3 | -0,18 |
| 20,55 | -0,48 |
| 41,96 | -0,99 |
| 100 | -1,93 |

### Beispiel 2

### Herstellung, Kalibrierung und Sterilisierung eines opto-chemischen Sensors

0,10 g Polyetherimid "Ultem 1000" der Firma General Electric werden mit 1,15 g Chloroform versetzt und das Polymer unter Rühren bei Raumtemperatur gelöst. Die Polymerlösung wird mit 0,001 g Tris(4,7-diphenyl-1,10-phenanthrolin)-Ruthenium(II)-perchlorat versetzt und gerührt. Durch Rakeln werden Schichten mit einer Naßfilmdicke von 50 µm auf einer Mylar-Polyestermembran aufgezogen, bei Raumtemperatur etwa eine Stunde lang getrocknet und etwa 16 Std. im Trockenschrank bei etwa 99°C getrocknet.

Fig. 2 zeigt die Kalibrierfunktionen einer Polyetherimidmembran mit Tris(4,7-diphenyl-1,10-phenanthrolin)-Ruthenium-(II)-perchlorat vor und nach einer Heißdampfsterilisation, wobei auf der Abszisse wiederum der Partialdruck von Sauerstoff und auf der Ordinate die normierte Phasenverschiebung der lumineszierenden Membran gezeigt ist.

Die vorbehandelte, d.i. einmal sterilisierte Membran, verglichen mit derselben Membran, die ein weiteres Mal im Autoklaven behandelt wurde, ergibt die in der nachfolgenden Tabelle angeführten zahlenwerte.

| Vol.-% O₂ im Meßgas | Abweichung, in Vol.-% O₂ |
|---|---|
| 0 | 0,06 |
| 10,3 | -0,12 |
| 20,55 | -0,38 |
| 41,96 | -0,85 |

### Beispiel 3

### Herstellung eines opto-chemischen Sensors, Kalibrierung und Reinigung mit Natronlauge bei erhöhter Temperatur

Es werden 0,31 g Polysulfon der Firma Aldrich mit 2,81 g Chloroform versetzt und das Polymer durch Rühren bei Raumtemperatur im Lösungsmittel gelöst. 1,25 g der Polymerlösung werden entnommen und mit 0,0017 g Tris-(4,7-diphenyl-,10-phenanthrolin)-Ruthenium(II)perchlorat bei Raumtemperatur gerührt. Die Lösung wird durch Rakeln als dünne Schicht mit 50 µm Naßfilmdicke auf 175 µm dicke Trägerfolien aufgezogen. Nach einer Trockenperiode von etwa einer Stunde bei Raumtemperatur werden die derart hergestellten Folien bei etwa 138 °C im Trockenschrank für etwa 16 Stunden belassen. Bis zum Zeitpunkt der Messung wurde die Membran im Dunkeln bei Raumtemperatur aufbewahrt. Zu Kalibrierzwecken wurde die Phasenverschiebung der lumineszierenden Membran in Abhängigkeit vom Sauerstoffpartialdruck gemessen. Dann wurde die Membran für 30 min einer 1N NaOH bei 50 °C ausgesetzt, dann mit destilliertem Wasser gespült, etwa 15 Stunden im Dunkeln bei Raumtemperatur trocknen gelassen und anschließend einer erneuten Bestimmung der Kalibrierfunktion unterzogen.

Die nachfolgende Tabelle enthält die Ergebnisse der mit NaOH behandelten Membran, wobei die Meßwerte der behandelten Membran auf die Kalibrierfunktion der unbehandelten Membran bezogen werden. Die Abweichungen vor und nach NaOH-Behandlung sind ausgedrückt in vol.-% Sauerstoff.

| Sauerstoffgehalt im Kalibriergas [hPa] | Abweichung der mit 1N NaOH bei 50 °C für 30 min behandelten von der unbehandelten Membran, ausgedrückt in vol.-% O₂ Abw. |
|---|---|
| 0 | 0,04 |
| 5,1 | 0,02 |
| 10,3 | -0,01 |
| 20,55 | -0,07 |
| 41,96 | -0,21 |
| 100 | -0,44 |

### Beispiel 4

### Herstellung eines opto-chemischen Sensors, Kalibrierung und Reinigung mit verdünnter Phosphorsäure bei erhöhter Temperatur

### (Gleiche Charge wie in Beispiel 3)

Es werden 0,31 g Polysulfon der Firma Aldrich mit 2,81 g Chloroform versetzt und das Polymer durch Rühren bei Raumtemperatur im Lösungsmittel gelöst. 1,25 g der Polymerlösung werden entnommen und mit 0,0017 g Tris-(4,7-diphenyl-1,10-phenanthrolin)-Ruthenium(II)perchlorat bei Raumtemperatur gerührt. Die Lösung wird durch Rakeln als dünne Schicht mit 50 µm Naßfilmdicke auf 175 µm dicke Trägerfolien augezogen. Nach einer Trockenperiode von etwa einer Stunde bei Raumtemperatur werden die derart hergestellten Folien bei etwa 138 °C im Trockenschrank für etwa 16 Stunden belassen. Bis zum Zeitpunkt der Messung wurde die Membran im Dunkeln bei Raumtemperatur aufbewahrt.

Zu Kalibrierzwecken wurde die Phasenverschiebung der lumineszierenden Membran in Abhängigkeit vom Sauerstoffpartialdruck gemessen. Dann wurde die Membran für 30 min einer 2,5 % Phosphorsäure bei 50 °C ausgesetzt, sodann mit destilliertem Wasser gespült, etwa 15 Stunden im Dunkeln bei Raumtemperatur trocknen gelassen und dann einer erneuten Bestimmung der Kalibrierfunktion unterzogen.

Die nachfolgende Tabelle enthält die Ergebnisse der mit Phosphorsäure behandelten Membran, wobei die Meßwerte der behandelten Membran auf die Kalibrierfunktion der unbehandelten Membran bezogen werden. Die Abweichungen vor und nach der Phosphorsäurebehandlung sind ausgedrückt in Vol.-% Sauerstoff.

| Sauerstoffgehalt im Kalibriergas [hPa] | Abweichung der mit 2,5 %-iger H₃PO₄ bei 50 °C für 30 min behandelten von der unbehandelten Membran, ausgedrückt in vol.-% O₂ Abw. |
|---|---|
| 0 | -0,02 |
| 5,1 | -0,04 |
| 10,3 | -0,06 |
| 20,55 | -0,13 |
| 41,96 | -0,25 |
| 100 | -0,53 |

### Beispiel 5

### Herstellung eines opto-chemischen Sensors, Kalibrierung und Sterilisierung

Es werden 0,205 g PSU der Firma Aldrich mit 1,8435 g Chloroform versetzt und das Polymer bei Raumtemperatur durch Rühren gelöst. Dieser Lösung werden 1,32 g entnommen und mit 1,24 mg Pt-Octaethylporphyrinketon versetzt und bei Raumtemperatur bis zur vollständigen Lösung des Farbstoffes gerührt. Sodann werden auf Mylar-Polyestermembranen sensitive Schichten mit einer Naßfilmdicke von 50 µm aufgezogen. Diese Membranen werden bei etwa 130°C etwa 15 Stunden lang im Trockenschrank getrocknet.

Es werden Kennlinien mittels Intensitätsmessung aufgenommen, eine Kennlinie der nicht sterilisierten Membran, eine Kennlinie der einmal (60 min bei 135 °C) sterilisierten und eine Kennlinie der zweimal sterilisierten Membran. (Fig. 3)

Die nachfolgende Tabelle zeigt die Abweichungen der zweimal sterilisierten von der einmal sterilisierten Membran, die erste Sterilisation wird als Vorbehandlung angesehen.

| Sauerstoffgehalt im Kalibriergas [hPa] | Abweichung [Vol.-% O₂] der zweimal sterilisierten von der einmal sterilisierten und bei 130 °C getrockneten Membran |
|---|---|
| 0 | 0 |
| 10 | -0,31 |
| 21 | -0,72 |
| 40 | -1,46 |
| 100 | -4,25 |

## Patentansprüche

1. Opto-chemischer Sensor, bestehend aus einer Polymermatrix und einem darin enthaltenen Lumineszenzfarbstoff, dessen Emissionsvermögen nach einer Anregung mit elektromagnetischer Strahlung, insbesondere Licht, durch nachzuweisende Substanzen, wie gasförmiges oder gelöstes O₂, SO₂, H₂O₂, Cl₂, Stickoxide, halogenierte Kohlenwasserstoffe, veränderbar ist, wobei die Polymermatrix aus wenigstens einem Polymer ohne Zusatz von Weichmachern gebildet ist, welches Polymer in der Hauptkette Phenylgruppen enthält, **dadurch gekennzeichnet, daß** das Polymer aus Polysulfonen, Polyethersulfonen, Polyetherimiden und/oder Polyoxyphenylenen gewählt ist, daß das Polymer eine Glasübergangstemperatur über 140 °C aufweist und daß der Lumineszenzfarbstoff während einer Sterilisation gleichmäßig verteilt bleibt.

2. Opto-chemischer Sensor nach Anspruch 1, **dadurch gekennzeichnet, daß** die Menge an Lumineszenzfarbstoff in dem Polymer 0,01 bis 100 mMol Farbstoff pro kg Polymer, insbesondere 0,1 bis 20 mMol Farbstoff pro kg Polymer, beträgt.

3. Opto-chemischer Sensor nach Anspruch 1 oder 2, **dadurch gekennzeichnet, daß** der in der Polymermatrix enthaltene Lumineszenzfarbstoff ein bis mindestens 150 °C stabiler Farbstoff, gewählt aus der Gruppe der anorganischen Salze von Übergangsmetallkomplexen mit α-Diiminliganden, wie beispielsweise Tris(4,7-diphenyl-1,10-phenanthrolin)-Ruthenium(II)-Salze, Tris(1,10-phenanthrolin)-Ruthenium (II)-Salze und Tris-2,2'-bipyridyl-Ruthenium(II)-Salze, oder des Terpyridins, z.B. Osmiumterpyridin; der Übergangsmetallkomplexe von Porphyrinen oder Porphyrinderivaten, wie beispielsweise Komplexe des Tetraphenylporphyrins von Pt oder Pd, des Octaethylporphyrinketons von Pt oder Pd, des Tetrapentafluorophenylporphyrins von Pt oder Pd oder des Octaethylporphyrins von Pt oder Pd; der polycyclischen, aromatischen Kohlenwasserstoffe, wie beispielsweise Decacyclen, Pyren oder dessen Derivate, oder Campherchinon, ist.

4. Opto-chemischer Sensor nach einem der Ansprüche 1 bis 3, **dadurch gekennzeichnet, daß** der opto-chemische Sensor auf einen Träger aufgebracht ist.

5. Opto-chemischer Sensor nach Anspruch 4, **dadurch gekennzeichnet, daß** als Träger optisch inaktive, lichtdurchlässige, in organischen Lösungsmitteln, Säuren, Basen und Wasser unlösliche bzw. resistente Polymere, wie beispielsweise Polyester, wie PET, Polymethylmethacrylate oder Glas, verwendet werden.

6. Opto-chemischer Sensor nach einem der Ansprüche 1 bis 5, **dadurch gekennzeichnet, daß** der opto-chemische Sensor mit einer für die zu analysierende Substanz durchlässigen, optischen Isolier- bzw. Schutzschicht abgedeckt ist.

7. Opto-chemischer Sensor nach Anspruch 6, **dadurch gekennzeichnet, daß** die optische Isolierschicht aus insbesondere grobporigem Polytetrafluorethylen, Copolymeren, bestehend aus 2,2-bistrifluormethyl-4,5-difluoro-1,3-dioxolen und Tetrafluorethylen, oder Silikon besteht.

8. Verfahren zur Herstellung eines opto-chemischen Sensors nach einem der Ansprüche 1 bis 7, dessen Emissionsvermögen nach einer Anregung mit elektromagnetischer Strahlung, insbesondere Licht, durch nachzuweisende Substanzen, wie gasförmiges oder gelöstes O₂, SO₂, H₂O₂, veränderbar ist, wobei eine wenigstens 1 bis 25 Gew.-%-ige Lösung eines Polymers, welches in der Hauptkette Phenylgruppen enthält, in einem organischen Lösungsmittel hergestellt wird und die Mischung zu einer homogenen Membran verfestigt wird, **dadurch gekennzeichnet, daß** in der Lösung 0,01 bis 100 mMol Lumineszenzfarbstoff pro kg Polymer ausgewählt aus Polysulfonen, Polyethersulfonen, Polyetherimiden und/oder polyoxyphenylenen, mit einer glasübergangstemperator über 140°C zugesetzt werden, daß als Lumineszenzfarbstoff ein bis mindestens 150 °C stabiler Farbstoff, gewählt aus der Gruppe der anorganischen Salze von Übergangsmetallkomplexen mit α-Diiminliganden, wie beispielsweise Tris(4,7-diphenyl-1,10-phenanthrolin)-Ruthenium(II)-Salze, Tris(1,10-phenanthrolin)-Ruthenium (II)-Salze und Tris-2,2'-bipyridyl-Ruthenium(II)-Salze, oder des Terpyridins, z.B. Osmiumterpyridin; der Übergangsmetallkomplexe von Porphyrinen oder Porphyrinderivaten, wie beispielsweise Komplexe des Tetraphenylporphyrins von Pt oder Pd, des Octaethylporphyrinketons von Pt oder Pd, des Tetrapentafluorophenylporphyrins von Pt oder Pd oder des Octaethylporphyrins von Pt oder Pd; der polycyclischen, aromatischen Kohlenwasserstoffe, wie beispielsweise Decacyclen, Pyren oder dessen Derivate, oder Campherchinon verwendet wird und daß der opto-chemische Sensor zur Fertigstellung in einem Ofen bei 100 bis 150 °C für 30 min bis 24 Std. nachgetrocknet wird.

9. Verfahren nach Anspruch 8, **dadurch gekennzeichnet, daß** organische Lösungsmittel, wie Toluol, Chloroform und/oder Methylenchlorid oder eine Mischung daraus, verwendet wird.

10. Verfahren nach Anspruch 8 oder 9, **dadurch gekennzeichnet, daß** der Sensor bei einer Temperatur zwischen 100 °C und 150 °C und einem Druck zwischen 1,2 bar und 4 bar für 20 bis 90 min sterilisiert wird.

11. Verfahren nach Anspruch 10, **dadurch gekennzeichnet, daß** die Sterilisation unter Verwendung von Heißdampf, H₂O₂, Ethanol, oder β- oder γ-Strahlen durchgeführt wird.

12. Verfahren nach einem der Ansprüche 8 bis 11, **dadurch gekennzeichnet, daß** der Sensor durch Tauchen in etwa 1 N Säure oder Lauge, insbesondere Phosphorsäure, NaOH, KOH, für 10 bis 40 min bei Temperaturen zwischen 20 und 90 °C gereinigt wird.

## Claims

1. An optochemical sensor comprised of a polymer matrix and a luminescent dye incorporated therein, whose emission capacity is variable upon excitation with an electromagnetic radiation, in particular light, by detectable substances such as gaseous or dissolved O₂, SO₂, H₂O₂, Cl₂, nitrogen oxides, halogenated hydrocarbons, wherein the polymer matrix is formed of at least one polymer without addition of plasticizers, which polymer contains phenyl groups in its main chain, **characterized in that** the polymer is selected from polysulfones, polyether sulfones, polyether imides and/or polyoxyphenylenes, that the polymer has a glass transition temperature of above 140 °C and that the luminescent dye remains evenly distributed during a Sterilisation.

2. An optochemical sensor according to claim 1, **characterized in that** the amount of luminescent dye incorporated in the polymer is 0.01 to 100 mMol dye per kg polymer, in particular 0.1 to 20 mMol dye per kg polymer.

3. An optochemical sensor according to claim 1 or 2, **characterized in that** the luminescent dye incorporated in the polymer matrix is a dye that is stable up to at least 150 °C and selected from the group consisting of the inorganic salts of transition metal complexes having α-diimine ligands, such as tris(4,7-diphenyl-1,10-phenanthroline) ruthenium(II) salts, tris (1,10-phenanthroline) ruthenium (II) salts and tris-2,2'-bipyridyl ruthenium(II) salts, or of terpyridine, such as osmium terpyridine; the transition metal complexes of porphyrines or porphyrine derivatives, such as complexes of the tetraphenylporphyrine of Pt or Pd, of the octaethylporphyrine ketone of Pt or Pd, of the tetrapentafluorophenylporphyrine of Pt or Pd, or of the octaethylporphyrine of Pt or Pd; of polycyclic aromatic hydrocarbons, such as decacyclene, pyrene or its derivatives; or campherchinone.

4. An optochemical sensor according to any of the claims 1 to 3, **characterized in that** the optochemical sensor is applied on a substrate.

5. An optochemical sensor according to claim 4, **characterized in that** optically inactive light-permeable polymers that are insoluble and resistant in organic solvents, acids, bases and water, such as polyesters like PET, polymethylmethacrylate or glass, are used as said substrate or carrier.

6. An optochemical sensor according to any of the claims 1 to 5, **characterized in that** the optochemical sensor is covered by an optically insulating or protecting layer permeable to the substance to be analyzed.

7. An optochemical sensor according to claim 6, **characterized in that** the optically insulating layer is comprised of, in particular, coarsely porous polytetrafluoroethylene, copolymers consisting of 2,2-bis-trifluoromethyl-4,5-difluoro-1,3-dioxolene and tetrafluoroethylene, or silicone.

8. A method for producing an optochemical sensor according to any of the claims 1 to 7 whose emission capacity is variable upon excitation with an electromagnetic radiation, in particular light, by detectable substances such as gaseous or dissolved O₂, SO₂, H₂O₂, **characterized in that** an at least 1 to 25 wt.-% solution of a polymer containing phenyl groups in its main chain is prepared in an organic solvent and the mixture is cured to form a homogenous membrane, **characterized in that** 0.01 to 100 mMol luminescent dye per kg polymer selected from polysulfones, polyether sulfones, polyether imides and/or polyoxyphenylenes with a glass transition temperature of above 140 °C are added to the solution, that as luminescent dye a dye is used being stable up to at least 150 °C and selected from the group consisting of the inorganic salts of transition metal complexes having α-diimine ligands, such as tris(4,7-diphenyl-1,10-phenanthroline) ruthenium(II) salts, tris(1,10-phenanthroline) ruthenium(II) salts and tris-2,2'-bipyridyl ruthenium(II) salts, or of terpyridine, such as osmium terpyridine; the transition metal complexes of porphyrines or porphyrine derivatives, such as complexes of the tetraphenylporphyrine of Pt or Pd, of the octaethylporphyrine ketone of Pt or Pd, of the tetrapentafluorophenylporphyrine of Pt or Pd, or of the octaethylporphyrine of Pt or Pd; of polycyclic aromatic hydrocarbons, such as decacyclene, pyrene or its derivatives; or campherchinone and that the optochemical sensor is subsequently dried in a furnace at 100 to 150 °C for 30 minutes to 24 hours for its completion.

9. A method according to claim 8, **characterized in that** organic solvents such as toluene, chloroform and/or methylene chloride or a mixture thereof are used.

10. A method according to claim 8 or 9, **characterized in that** the sensor is sterilized at a temperature of between 100 °C and 150°C and a pressure of between 1.2 bar and 4 bars for 20 to 90 minutes.

11. A method according to claim 10, **characterized in that** the sterilization is carried out using hot vapor, H₂O₂, ethanol or β- or γ-rays.

12. A method according to any of the claims 8 to 11, **characterized in that** the sensor is purified by immersion into an about 1 N acid or lye, in particular, phosphoric acid, NaOH, KOH, for 10 to 40 minutes at temperatures of between 20 and 90 °C.

## Revendications

1. Capteur opto-chimique constitué d'une matrice polymère et d'un colorant luminescent qui y est contenu, dont le pouvoir d'émission, après une excitation à l'aide d'un rayonnement électromagnétique, en particulier la lumière, peut être modifié sous l'effet de substances détecter, telles que O₂, SO₂, H₂O₂, Cl₂, les oxydes d'azote, les hydrocarbures halogénés, sous forme gazeuse ou dissoute, la matrice polymère étant formée à partir d'au moins un polymère sans addition de plastifiants, lequel polymère contenant dans sa chaîne principale des groupes phényle, **caractérisé en ce que** le polymère est choisi parmi les polysulfones, les polyéthersulfones, les polyétherimides et/ou les polyoxyphénylènes ; que le polymère présente une température de transition vitreuse supérieure à 140°C ; et que le colorant luminescent reste uniformément réparti pendant une stérilisation.

2. Capteur opto-chimique selon la revendication 1, **caractérisé en ce que** la quantité du colorant luminescent dans le polymère est de 0,01 à 100 mmol de colorant par kg de polymère, en particulier de 0,1 à 20 mmol de colorant par kg de polymère.

3. Capteur opto-chimique selon la revendication 1 ou 2, **caractérisé en ce que** le colorant luminescent contenu dans la matrice polymère est un colorant stable jusqu'à au moins 150°C, choisi dans le groupe des sels inorganiques de complexes de métaux de transition avec des ligands α-diimines, tels par exemple que les sels de tris(4,7-diphényl-1,10-phénanthroline)-ruthénium(II), les sels de tris(1,10-phénanthtoline)-ruthénium(II) et les sels de tris-2,2'-bipyridyle-ruthénium(II), ou de la terpyridine, par exemple la terpyridine d'osmium ; des complexes de métaux de transition de porphyrines ou de dérivés de porphyrine, tels que par exemple les complexes de tétraphénylporphyrine de Pt ou de Pd, d'octaéthylporphyrine-cétone de Pt ou de Pd, de tétrapentafluorophénylporphyrine de Pt ou de Pd ou d'octaéthylporphyrine de Pt ou de Pd ; des hydrocarbures aromatiques polycycliques tels que par exemple le décacyclène, le pyrène ou ses dérivés, ou la camphoquinone.

4. Capteur opto-chimique selon l'une des revendications 1 à 3, **caractérisé en ce que** le capteur opto-chimique est appliqué sur un support.

5. Capteur opto-chimique selon la revendication 4, **caractérisé en ce qu'**on utilise en tant que support des polymères optiquement inactifs, transparents à la lumière, insolubles dans les solvants organiques, les acides, les bases et l'eau ou résistants à ces derniers, tels que par exemple les polyesters tels que le PET, les poly(méthacrylates de méthyle) ou le verre.

6. Capteur opto-chimique selon l'une des revendications 1 à 5, **caractérisé en ce que** le capteur opto-chimique est recouvert d'une couche optique, isolante ou de protection, transparente pour la substance à analyser.

7. Capteur opto-chimique selon la revendication 6, **caractérisé en ce que** la couche optique isolante est constituée en particulier de polytétrafluoréthylène à gros pores, de copolymères constitués de 2,2-bistrifluorométhyl-4,5-difluoro-1,3-dioxoles et de tétrafluoréthylène, ou de silicone.

8. Procédé de préparation d'un capteur opto-chimique selon l'une des revendications 1 à 7, dont le pouvoir d'émission, après une excitation avec un rayonnement électromagnétique, en particulier la lumière, peut être modifie sous l'effet de substances à détecter, telles que O₂, SO₂, H₂O sous forme gazeuse ou dissoute, procédé dans lequel on prépare dans un solvant organique une solution à au moins 1 à 25 % en poids d'un polymère qui dans sa chaîne principale contient des groupes phényle, et on solidaire le mélange pour obtenir une membrane homogène, **caractérisé en ce qu'**on ajoute à la solution 0,01 à 100 mmol d'un colorant luminescent par kg d'un polymère choisi parmi les polysulfones, les polyéthersulfones, les polyétherimides et/ou les polyoxyphénylènes, ayant une température de transition vitreuse supérieure à 140°C ; que l'on utilise en tant que colorant luminescent un colorant stable jusqu'à au moins 150°C, choisi dans le groupe des sels inorganiques de complexes de métaux de transition avec des ligands α-diimines, tels par exemple que les sels de tris(4,7-diphényl-1,10-phénanthroline)-ruthénium(II), les sels de tris(1,10-phénanthroline)-ruthénium(II) et les sels de tris-2,2'-bipyridyle-ruthénium(II), ou de la terpyridine, par exemple la terpyridine d'osmium ; des complexes de métaux de transition de porphyrines ou de dérivés de porphyrine, tels que par exemple les complexes de tétraphénylporphyrine de Pt ou de Pd, d'octaéthylporphyrinecétone de Pt ou de Pd, de tétrapentafluorophénylporphyrine de Pt ou de Pd ou d'octaéthylporphyrine de Pt ou de Pd ; des hydrocarbures aromatiques polycycliques tels que par exemple le décacyclène, le pyrène ou ses dérivés, ou la camphoquinone ; et que le capteur opto-chimique est, pour être parachevé, séché dans un four à une température de 100 à 150°C pendant 30 minutes à 24 heures.

9. Procédé selon la revendication 8, **caractérisé en ce qu'**on utilise des solvants organiques tels que le toluène, le chloroforme et/ou le chlorure de méthylène, ou un mélange de ceux-ci.

10. Procédé selon la revendication 8 ou 9, **caractérisé en ce que** le capteur est stérilisé à une température comprise entre 100 et 150°C et sous une pression comprise entre 1,2 et 4 bar pendant 20 à 90 min.

11. Procédé selon la revendication 10, **caractérisé en ce que** la stérilisation est mise en oeuvre par utilisation de vapeur surchauffée, de H₂O₂, d'éthanol ou de rayons β ou γ.

12. Procédé selon l'une des revendications 8 à 11, **caractérisé en ce que** le capteur est purifié par immersion dans un acide ou une base à environ 1 N, en particulier l'acide phosphorique, NaOH, KOH, pendant 10 à 40 min à des températures comprises entre 20 et 90°C.
